# EUROPEAN PATENT SPECIFICATION

(11) **EP 2 586 302 B1**
(45) Date of publication and mention of the grant of the patent: **26.02.2014**
(21) Application number: 12006977.8
(22) Date of filing: 09.10.2012
(51) Int. Cl.: A01K 29/00, A01K 45/00, G01G 17/08, G01G 9/00

(54) **Device for weighing chicks**
Vorrichtung zum Wiegen von Küken
Dispositif de pesage de poussins

(30) Priority: 26.10.2011 BE 201100624
(43) Date of publication of application: 01.05.2013
(73) Proprietor: Innovatec B.V., 4122 GE Zijderveld (NL)
(72) Inventor: Van de Loo, Philip, 4132 BR Vianen (NL)
(74) Representative: Donné, Eddy

(56) References cited:
- WO-A1-93/16351

## Description

The present invention relates to a device for weighing chicks.

More specifically the device is intended for quickly and effectively weighing chicks or other poultry that are reared in large numbers in an industrial poultry farm.

Traditionally chicks are reared in industrial poultry farms for example, whereby a large number of young animals are transported by conveyor belt in a short time span and then have to be sorted according to weight for further sale or for statistical or metric purposes.

Devices are already known that make use of a conveyor belt or other means of transport to send the animals, in this case chicks, through a chute, whereby the chute is equipped with a detection system in the vertical plane for example, consisting of an upright light source at one side of the chute and an upright detector for the light source on the other side of the chute.

The light beam from the light source to the detector is interrupted when a farm animal is in the light path, and this interruption is detected by the detector, which can deduce from this, by means of peripheral equipment, that a chick has passed through the beam.

Linear light sources are also known such as for example a matrix of light emitting diodes (LED's) the beams of which are received by linear matrices of detectors.

As a result not only the transit of a chick can be detected, but also its cross-section in one vertical plane can be deduced such that the outline of a chick can be recomposed.

This outline gives a rough approximation of the weight of the chick, but, because it is only measured in one dimension, such an approximation is not very accurate.

A disadvantage attached to such a device is that the data for one chick are only approximate and that a number of chicks of the same weight can produce different outlines in one plane, which can lead to incorrect measurements.

The same problem exists in a device described in WO 93/16351, designed to detect living fish when they swim through a bunch of beams, and by which their silhouettes are registered, enabling an indirect measurement of their weights.

The purpose of the present invention is to provide a solution to this disadvantage and other disadvantages by providing a device that enables two outlines of the same farm animal to be determined simultaneously, i.e. one outline in the vertical plane and one outline in another plane, preferably the horizontal plane.

To this end the invention concerns a device for determining the weight of chicks or other poultry, whereby the device contains detection and transport means to guide the chicks past the detection means, and whereby the detection means enable an outline of the passing chick to be determined, whereby these detection means enable two outlines of the same chick to be determined in at least two different directions, and whereby these detection means are linked to a data processing unit that contains an algorithm to calculate an approximate weight from the combination of two or more outlines of the individual chick that came through the detection means at that time.

Preferably the outlines are two outlines determined in two directions that are cross and preferably perpendicular to one another.

An advantage attached to a device that enables two outlines to be defined in planes perpendicular to one another is that the combination of the two outlines enables the weight of the chick to be calculated much more accurately.

Another advantage of such a device is that it enables sorting to be done according to weight, volume or size with a much better resolving power than with a device that only determines an outline of the chick in one plane.

Another advantage of such a device is that the weight determination can proceed much more quickly than by weighing the chicks individually on a weighing device, which means that the chicks can be weighed, and sorted, at a much higher rate, resulting in a substantial cost saving.

Preferably the detection means consist of two linear light sources or series of light sources with two corresponding linear detectors or series of detectors, whereby the light sources can for example consist of a row of light emitting or laser emitting diodes.

An advantage of these detection means is that the matrices of LED' s for example enable an image of the outline to be formed with a resolution that depends on the number of LED's that are used.

Another advantage of LED's for example is that these light sources are highly energy-efficient light sources and have a long lifetime, and that their wavelength can be chosen according to the application. For example blue light sources can be used if blue-sensitive detectors are used.

Another advantage of these detection means is that they are able to very quickly pass on the measured outlines to a data processing unit.

It is also possible not to use any light sources at all but only to use infrared (IR) light detectors as a detection means that are sensitive to the IR radiation due to the body temperature of the chick.

For example the detection means may consist of IR sensitive digital cameras, whereby the outline of the chick can be registered on the basis of the IR radiation that the chick radiates itself.

An advantage of these IR sensitive detectors or cameras is that light sources are no longer needed and that the weight measurement and sorting can even be done in the dark.

The detection means can also consist of light sources and digital cameras as detectors, whereby the outline of the chick can be recognised on the digital image via image processing software in the camera itself or in the data processing unit that is linked to the camera.

Preferably the software enables an outline to be composed from an image continually built up over time from successive signals from the detection means, and the various outlines of the chicks to be calculated from this image.

Preferably the measuring frequency of the signals by the detection means is high enough to obtain an outline with sufficient resolution, and to send the weight calculated from these outlines to the sorting device promptly.

Preferably the transport means run in a guide that conveys the chicks one by one past the detection means.

An advantage of such a transport means is that the overlapping of outlines due to chicks passing through the detection means simultaneously is prevented.

The transit rate can be raised to 20 chicks per second for example, without rendering the determination of the outline impossible.

An advantage of this high transit rate is that a large number of chicks can be weighed in a very short time span, and sorted with regard to number and weight, counted and registered at the same time, which is not possible by hand.

Preferably the device for determining the weight of chicks or poultry is coupled to a sorting device with a number of exits for sorting chicks according to weight, and contains an algorithm that enables the chicks to be guided to a selective exit according to the approximate weight, calculated by the data processing unit or by the sorting device itself.

With the intention of better showing the characteristics of the invention, a preferred embodiment of a device according to the invention is described hereinafter by way of an example, without any limiting nature, with reference to the accompanying drawings, wherein:
figure 1 schematically shows a perspective view of a device for weighing chicks according to the invention;
figure 2 shows a side view of a first outline of the chick as seen by the detectors from the movement of the chick;
figure 3 shows a second outline of the chick measured perpendicular to the first outline and the combination of the two outlines in the vertical and horizontal direction;

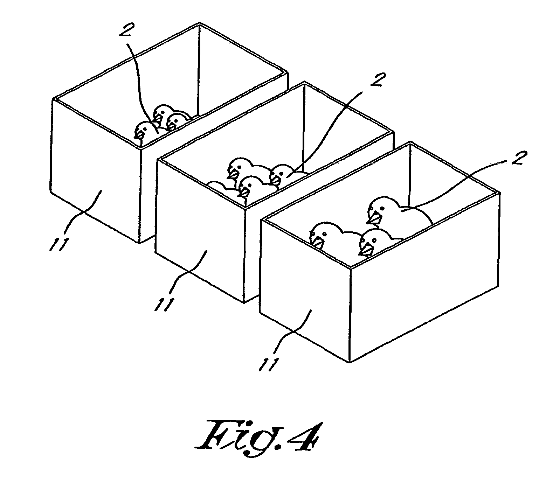

figure 4 shows a perspective view of the chicks after sorting by weight into different quotas.

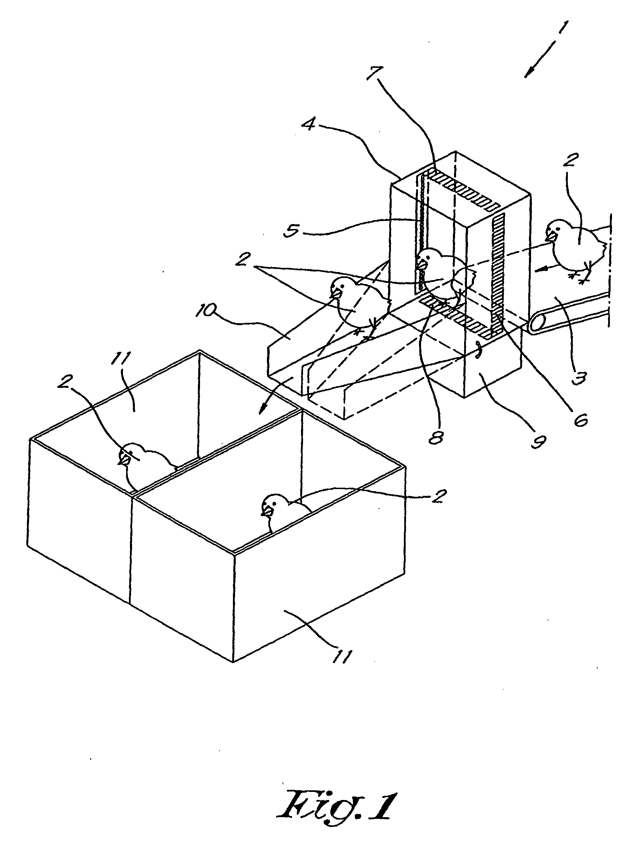

Figure 1 shows the device 1 for weighing chicks 2 according to the invention, whereby chicks 2 are conveyed by a transport means 3 and carried through detection means 4, that consist of a vertical upright linear series of light sources 5 which light beams strike the opposite vertical upright linear series of light detectors 6, and a horizontal linear series of light sources 7 with a linear detector 8 placed opposite thereto. These detection means 4 are connected to a data processing unit 9.

Downstream the detection means 4 are equipped with a movable outlet channel 10 which exit can be directed by the data processing unit 9 to a suitable receptacle 11 for the transported farm animals 2 according to their weight.

The operation of this device 1 is simple and as follows.

Chicks 2 are conveyed at a certain rate up to a number of animals per second by a transport system 3, by which the chicks move through the detection means 4 and pass through a horizontal 8 and vertical detector 6. While the chick 2 passes by the horizontal 7 and vertical 5 linear light sources, the light beam from some of the light sources is no longer detected by the vertical 6 and horizontal detector 8.

The detected signal from both detectors is sent at various points in time during the transit of the farm animal 2 to the data processing unit 9, which recomposes the successive signals into two outlines of the farm animal that has passed through, i.e. a side-view outline 13 and a top-view outline 14.

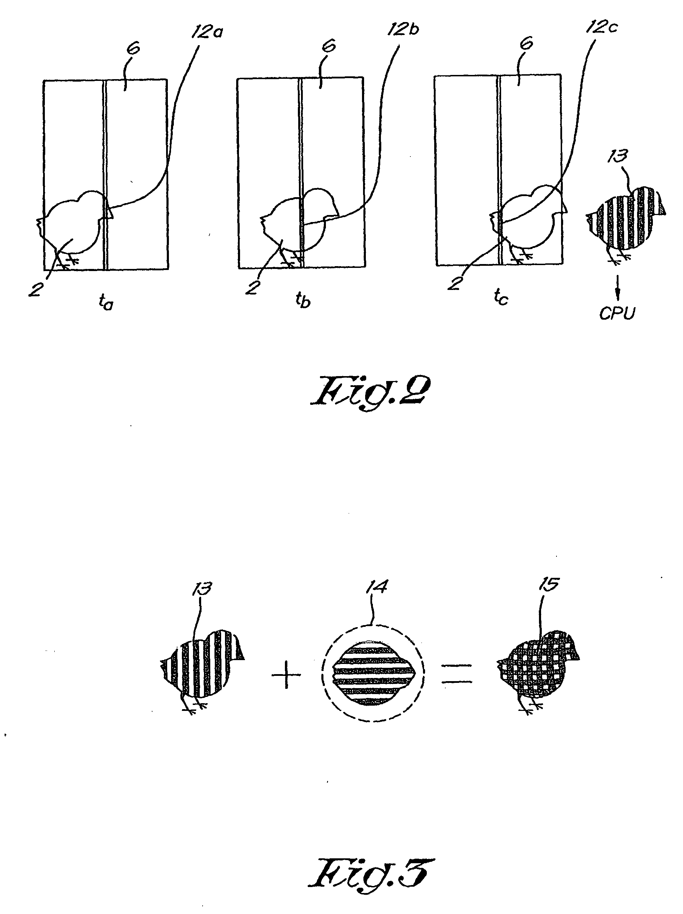

Figure 2 shows how the signal 12 for the side view is measured at successive points in time ta, tb, tc, etc, to form corresponding signals 12a, 12b, 12c, that are combined by the data processing unit 9 into a side-view outline 13.

Figure 3 shows how the signals measured for the top view are combined into a top-view outline 14, which is then combined with the side-view outline 13 to form a recomposed volume 15 of the chick.

By combining the two outlines 13,14 the data processing unit 9 can very quickly calculate the volume and approximate weight of the chick 2, after which the data processing unit 9 sends an appropriate command to the movable outlet 10 so that the exit of this last-mentioned adopts the desired position to let the weighed farm animal land in the receptacle 11 in which its weight category is collected.

It goes without saying that the detection means 4 can also consist of two linear IR detectors 6,7 perpendicular to one another, whereby a light source is not required but the body temperature of the farm animal provides the IR radiation that is received by the detectors.

It also goes without saying that other embodiments are possible to obtain this two dimensional outline measurement, and that for example use can be made of digital cameras as detectors, which signal is converted by image processing into a relevant outline in the camera itself, or in the data processing unit linked to it 9.

It will also be clear that the speed of the signal transfer from the detectors to the data processing unit must be attuned to the speed with which the chicks pass through the detectors, so that these signals can be processed promptly to control the sorting device.

It is also clear that this device can not only be used for sorting, but also for compiling statistics or for other data processing purposes that can be linked to the measurement data.

The present invention is by no means limited to the embodiment described as an example and shown in the drawings, but a device for weighing and/or counting chicks according to the invention can be realised in all kinds of variants, without departing from the scope of the invention.

## Claims

1. Device (1) for determining the weight and number of chicks (2) or other poultry, whereby the device contains detection (4) and transport means (3) to guide the chicks past the detection means (4), whereby the detection means enable an outline (15) of the passing chick (2) to be determined, **characterised in that** these detection means (4) enable two outlines (13,14) of the same chick to be determined in at least two different directions, and whereby these detection means (4) are linked to a data processing unit (9) that contains an algorithm to calculate an approximate weight from the combination of two or more outlines (13,14) of the individual chick that came through the detection means (4) at that time.

2. Device (1) according to claim 1, **characterised in that** the outlines (13,14) are two outlines determined in two directions that are cross and preferably perpendicular to one another.

3. Device (1) according to claim 1, **characterised in that** the detection means consist of two linear light sources or series of light sources (7, 5) with two corresponding linear detectors or series of detectors (8, 6).

4. Device according to claim 3, **characterised in that** the light sources (7,5) consist of light emitting or laser emitting diodes (LED's).

5. Device (1) according to claim 1, **characterised in that** no light sources but only detectors for infrared (IR) light (6,7) are used as a detection means, that are sensitive to the IR radiation due to the body temperature of the chick (2).

6. Device according to claim 3 or 5, **characterised in that** the detection means (4) consist of IR-sensitive digital cameras, whereby the outline (13, 14) of the chick can be registered on the basis of the IR radiation that the chick (2) emits itself.

7. Device according to claim 2, **characterised in that** the detection means (4) consist of light sources (7,5) and digital cameras (8,6) as detectors, whereby the outline (13,14) of the chick (2) on the digital image can be recognised via image processing software in the camera itself or in the data processing unit (9) linked to the detectors (8,6).

8. Device (1) according to claim 7, **characterised in that** the software enables an outline (13) to be composed from an image built up over time from successive signals from the detection means (4), and on the basis of this image enables the various outlines (13,14) of the chicks to be calculated.

9. Device (1) according to claim 1, **characterised in that** the measuring frequency of the signals by the detection means (4) is high enough to obtain an outline (13, 14) with sufficient resolution and to be able to promptly send the weight calculated from these outlines (13,14) to the sorting device.

10. Device (1) according to claim 1, **characterised in that** the transport means (3) run in a guide (10) that convey the chicks one by one past the detection means (4) or can be distinguished between by the detection means (4) one by one.

11. Device (1) according to claim 1, **characterised in that** the transit rate can be raised up to 20 chicks per second for example, without making the determination of the outlines (15) impossible.

12. Sorting device with a number of outputs for sorting chicks (2), **characterised in that** it comprises a device (1) according to any one of the previous claims and an algorithm that enables the chicks (2) to be counted, registered, weighed and sorted by guiding them to a selective exit of a sorting device according to the approximate weight, calculated by the data processing unit (9) or by the sorting device itself.

## Patentansprüche

1. Vorrichtung (1) zur Ermittlung des Gewichts und der Anzahl von Küken (2) oder anderem Geflügel, wobei die Vorrichtung Detektions- (4) und Transportmittel (3) umfasst, um die Küken an den Detektionsmitteln (4) vorbeizuleiten, wobei die Detektionsmittel die Ermittlung eines Umrisses (15) des vorbeikommenden Kükens (2) gestatten, **dadurch gekennzeichnet, dass** diese Detektionsmittel (4) gestatten, zwei Umrisse (13, 14) desselben Kükens in mindestens zwei verschiedenen Richtungen zu ermitteln, und wobei diese Detektionsmittel (4) mit einer Datenverarbeitungseinheit (9) verbunden sind, die einen Algorithmus enthält, um aus der Kombination von zwei oder mehr Umrissen (13, 14) des individuellen Kükens, das in diesem Augenblick durch die Detektionsmittel (4) gekommen ist, ein annäherndes Gewicht zu errechnen.

2. Vorrichtung (1) nach Anspruch 1, **dadurch gekennzeichnet, dass** die Umrisse (13, 14) zwei Umrisse sind, die in zwei Richtungen ermittelt werden, die quer und bevorzugt lotrecht zueinander sind.

3. Vorrichtung (1) nach Anspruch 1, **dadurch gekennzeichnet, dass** die Detektionsmittel aus zwei linearen Lichtquellen oder Serien von Lichtquellen (7, 5) mit zwei entsprechenden linearen Detektoren oder Serien von Detektoren (8, 6) bestehen.

4. Vorrichtung nach Anspruch 3, **dadurch gekennzeichnet, dass** die Lichtquellen (7, 5) aus Licht emittierenden oder Laser emittierenden Dioden (LEDs) bestehen.

5. Vorrichtung (1) nach Anspruch 1, **dadurch gekennzeichnet, dass** keine Lichtquellen, sondern nur Detektoren für Infrarotlicht (IR-Licht) (6, 7) als Detektionsmittel verwendet werden, die empfindlich für die von der Körpertemperatur des Kükens (2) stammende IR-Strahlung sind.

6. Vorrichtung nach Anspruch 3 oder 5, **dadurch gekennzeichnet, dass** die Detektionsmittel (4) aus IR-empfindlichen digitalen Kameras bestehen, wobei der Umriss (13, 14) des Kükens auf Basis der IR-Strahlung, die das Küken (2) selbst abgibt, registriert werden kann.

7. Vorrichtung nach Anspruch 2, **dadurch gekennzeichnet, dass** die Detektionsmittel (4) aus Lichtquellen (7, 5) und digitalen Kameras (8, 6) als Detektoren bestehen, wobei der Umriss (13, 14) des Kükens (2) auf dem digitalen Bild mittels Bildverarbeitungssoftware in der Kamera selbst oder in der mit den Detektoren (8, 6) verbundenen Datenverarbeitungseinheit (9) erkannt werden kann.

8. Vorrichtung (1) nach Anspruch 7, **dadurch gekennzeichnet, dass** die Software gestattet, einen Umriss (13) aus einem in der Zeit aus aufeinanderfolgenden Signalen von den Detektionsmitteln (4) aufgebauten Bild zusammenzusetzen, und auf Basis dieses Bildes gestattet, die verschiedenen Umrisse (13, 14) der Küken zu berechnen.

9. Vorrichtung (1) nach Anspruch 1, **dadurch gekennzeichnet, dass** die Messfrequenz der Signale durch die Detektionsmittel (4) hoch genug ist, um einen Umriss (13, 14) mit ausreichender Auflösung zu erhalten, und um in der Lage zu sein, das aus diesen Umrissen (13, 14) berechnete Gewicht umgehend zu der Sortiervorrichtung durchzugeben.

10. Vorrichtung (1) nach Anspruch 1, **dadurch gekennzeichnet, dass** die Transportmittel (3) in einer Führung (10) laufen, wodurch die Küken eines nach dem anderen an den Detektionsmitteln (4) vorbeibefördert werden oder von den Detektionsmitteln (4) eines nach dem anderen unterschieden werden können.

11. Vorrichtung (1) nach Anspruch 1, **dadurch gekennzeichnet, dass** die Durchgangsgeschwindigkeit bis auf beispielsweise 20 Küken pro Sekunde erhöht werden kann, ohne die Ermittlung der Umrisse (15) unmöglich zu machen.

12. Sortiervorrichtung mit mehreren Ausgängen zum Sortieren von Küken (2), **dadurch gekennzeichnet, dass** sie eine Vorrichtung (1) gemäß einem der vorgenannten Ansprüche und einen Algorithmus umfasst, der es gestattet, die Küken (2) zu zählen, zu registrieren, zu wiegen und zu sortieren, indem sie gemäß dem annähernden Gewicht zu einem selektiven Ausgang einer Sortiervorrichtung geleitet werden, wobei dieses Gewicht durch die Datenverarbeitungseinheit (9) oder durch die Sortiervorrichtung selbst berechnet wurde.

## Revendications

1. Dispositif (1) pour déterminer le poids et le nombre de poulets ou d'autres volailles le dispositif contenant des moyens de détection (4) et des moyens de transport (3) pour guider les poulets devant les moyens de détection (4), les moyens de détection permettant de déterminer une silhouette (15) du poulet qui passe (2), **caractérisé en ce que** ces moyens de détection (4) permettent de déterminer deux silhouettes (13, 14) du même poulet dans au moins deux directions différentes, et ces moyens de détection (4) étant reliés à une unité de traitement de données (9) qui contient un algorithme pour calculer un poids approximatif à partir de la combinaison de deux silhouettes ou plus (13, 14) du poulet individuel qui est passé par les moyens de détection à ce moment.

2. Dispositif (1) selon la revendication 1, **caractérisé en ce que** les silhouettes (13, 14) représentent deux silhouettes déterminées dans deux directions qui se croisent et qui sont de préférence perpendiculaires l'une à l'autre.

3. Dispositif (1) selon la revendication 1, **caractérisé en ce que** les moyens de détection sont constitués par deux sources de lumière linéaire ou deux séries de sources de lumière (7, 5) comprenant deux détecteurs de lumière correspondants ou deux séries correspondantes de détecteurs (8, 6).

4. Dispositif (1) selon la revendication 3, **caractérisé en ce que** les sources de lumière (7, 5) sont constituées par des diodes émettant de la lumière ou émettant un laser (LED).

5. Dispositif (1) selon la revendication 1, **caractérisé en ce qu'**on n'utilise, comme moyen de détection, aucune source de lumière, mais uniquement des détecteurs (6, 7) pour la lumière infrarouge (IR) qui sont sensibles au rayonnement infrarouge dû à la température du corps du poulet (2).

6. Dispositif selon la revendication 3 ou 5, **caractérisé en ce que** les moyens de détection (4) sont constitués par des caméras numériques sensibles à l'infrarouge, la silhouette (13, 14) du poulet pouvant être enregistrée sur base du rayonnement infrarouge que le poulet (2) émet de lui-même.

7. Dispositif selon la revendication 2, **caractérisé en ce que** les moyens de détection (4) sont constitués par des sources de lumière (7, 5) et par des caméras numériques (8, 6) à titre de détecteurs, la silhouette (13, 14) du poulet (2) sur l'image numérique pouvant être reconnue via un logiciel de traitement d'images dans la caméra elle-même ou dans l'unité de traitement de données (9) reliée aux détecteurs (8, 6).

8. Dispositif (1) selon la revendication 7, **caractérisé en ce que** le programme permet de composer une silhouette (13) à partir d'une image élaborée au cours du temps à partir de signaux successifs émis par les moyens de détection (4), et sur base de cette image permet de calculer les diverses silhouettes (13, 14) des poulets.

9. Dispositif (1) selon la revendication 1, **caractérisé en ce que** la fréquence de mesure des signaux par les moyens de détection (4) est suffisamment élevée pour obtenir une silhouette (13, 14) possédant une résolution suffisante et pour pouvoir envoyer directement le poids calculé à partir de ces silhouettes (13, 14) au dispositif de triage.

10. Dispositif (1) selon la revendication 1, **caractérisé en ce que** les moyens de transport (3) s'étendent dans un guide (10) qui transport les poulets un par un devant les moyens de détection (4) ou bien les poulets peuvent être distingués un par un les uns des autres via les moyens de détection (4).

11. Dispositif (1) selon la revendication 1, **caractérisé en ce que** le débit de transit peut s'élever jusqu'à 20 poulets par seconde par exemple, sans rendre impossible la détermination des silhouettes (15).

12. Dispositif de triage comprenant plusieurs sorties pour trier des poulets (2), **caractérisé en ce qu'**il comprend un dispositif (1) selon l'une quelconque des revendications précédentes et un algorithme qui permet de compter, d'enregistrer, de peser et de trier les poulets (2) en les guidant en direction d'une sortie sélective d'un dispositif de triage en fonction du poids approximatif calculé par l'unité de traitement de données (9) ou par le dispositif de triage lui-même.
